# NEUE EUROPÄISCHE PATENTSCHRIFT

(11) **EP 2 315 713 B2**
(45) Veröffentlichungstag und Bekanntmachung des Hinweises auf die Entscheidung über den Einspruch: **01.03.2017**
(45) Hinweis auf die Patenterteilung: 23.01.2013
(21) Anmeldenummer: 09777282.6
(22) Anmeldetag: 17.07.2009
(51) Int. Cl.: B65G 1/137, B65G 1/08

(54) **VERFAHREN ZUM KOMMISSIONIEREN VON STÜCKGUT MIT EINEM KOMMISSIONIERAUTOMATEN UND BEIGEORDNETEM DURCHLAUFREGAL**
METHOD FOR THE ORDER PICKING OF ITEMS BY AN AUTOMATIC ORDER-PICKING DEVICE AND ASSOCIATED DYNAMIC-STORAGE RACK
PROCÉDÉ DE PRÉPARATION DE COMMANDES DE MARCHANDISES DE DÉTAIL À L'AIDE D'UN DISPOSITIF AUTOMATIQUE DE PRÉPARATION DE COMMANDES ET ÉTAGÈRE DE TRANSFERT ASSOCIÉE

(30) Priorität: 14.08.2008 DE 102008037658
(43) Veröffentlichungstag der Anmeldung: 04.05.2011
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2009/005228
(87) Internationale Veröffentlichungsnummer: WO 2010/017872

(56) Entgegenhaltungen:
- EP-A2- 1 975 091
- WO-A1-2005/118436
- AT-B- 403 156
- DE-U1- 8 907 478
- DE-U1-202008 010 881
- JP-A- 2006 103 873
- JP-A- 2007 210 773

## Beschreibung

Die Erfindung betrifft ein Verfahren dem Oberbegriff des zum Kommissionieren von Stückgut nacht Anspruchs 1 des mit einem Kommissionierautomaten und beigeordnetem Durchlaufregal als Vorrat zum Nachfüllen des Kommissionierautomaten mit Stückgut.

Es ist Stand der Technik, an der Rückseite eines Kommissionierautomaten die Produkte zu lagern, welche in die vertikalen bzw. nahezu vertikalen Produktschächte des Kommissionierautomaten eingegeben werden sollen. Die Lagerung kann zum Beispiel in statischen Regalen erfolgen.

Ist es notwendig, größere Mengen der Produkte zu lagern und nachzufüllen, werden Durchlaufregale eingesetzt. Die Produkte werden in Originalkartons an der Rückseite in das Durchlaufregal gefüllt. An der Vorderseite werden die Kartons bei Bedarf geöffnet und Einzelprodukte in den Kommissionierautomaten gefüllt.

Es gibt auch Lösungen, bei denen das Befüllen der Durchlaufkanäle durch ein zweidimensional bewegliches Regalbediengerät erfolgt, das auf Schienen geführt ist und längsverfahrbar und gleichzeitig höhenverstellbar ist, um Produkte in ein Regal einzulagern. Hier werden die Produkte zuerst auf einem Stellplatz im Regalbediengerät eingelagert und bei Bedarf in das Durchlaufregal geschoben.

JP2006 103 875 beschreibt eisen gattungsgemäßen Verfahren zum Kommissionieren.

Die Lösung mit einem Regalbediengerät zur automatischen Befüllung hat mehrere Nachteile:
■ Die Nachrüstbarkeit ist fast nie gegeben, da die Gebäude im Bereich der Automaten zu niedrig sind, und die Decken eine zu geringe Traglast für ein Hochregal besitzen.
■ Der Durchsatz eines Regalbediengeräts reicht in vielen Fällen nicht aus, um die gewünschte Menge an Produkten von Stellplätzen in die Durchlaufkanäle zu transferieren.
■ Regalbediengerätlösungen sind darauf angewiesen, dass ein einheitliches Behältnis gelagert wird. Zumindest muss die Breite gleich sein (z.B. 1 Karton 600x400 oder 2 Kartons 300x400).
■ Alle Produkte in den Durchlaufregalen müssen zuerst in das Regal eingelagert werden.
■ Der Energiebedarf und die elektrischen Anschlusswerte eines Regalbediengeräts sind so hoch, so dass die elektrischen Zuleitungen oft nicht ausreichen.

Ausgehend vom vorgenannten Stand der Technik ist es Aufgabe der Erfindung, ein Verfahren zum Nachfüllen eines dem Kommissionierautomaten vorgelagerten Durchlaufregals der eingangs genannten Gattung dahingehend zu verbessern, dass das Durchlaufregal bei einfachem Aufbau schnell und effektiv und zuverlässig mit Stückgut enthaltenden Behältern/Kartons befüllt und das Stückgut ergonomisch in den Kommissionierautomaten eingegeben werden kann.

Gelöst wird die Aufgabe durch ein Verfahren mit den Merkmalen nach Anspruch 1.

Wesen der Erfindung ist, dass das Stückgut vorzugsweise sortenrein in Behältern oder Kartons auf einer angetriebenen Förderstrecke zum Durchlaufregal automatisch transportiert und nach Lesung und Erkennung über einen angesteuerten stationären Lift und angesteuerte Etagenbediengeräte des Durchlaufregals in ausgewählten Durchlaufkanälen des Durchlaufregals mit von einer Bedienungsperson manuell erreichbaren Ausgängen automatisch eingebracht wird, und das Stückgut nach manueller Entnahme der Behälter/Kartons an einem ausgewählten Ausgang eines Durchlaufkanals und Entpackung der Behälter/Kartons von der Bedienungsperson in nachzufüllende Kommissionierschächte des Kommissionierautomaten sortenrein eingegeben wird.

Neben einer sortenreinen Befüllung der Durchlaufkanäle ist auch eine Mischbefüllung für sehr langsam drehende Produkte vorteilhaft.

Vorzugsweise werden hierbei unterschiedlich breite Behälter/Kartons im Etagenbediengerät durch Verstellmittel an einer Behälterseite ausgerichtet und in ausgewählte Durchlaufkanäle eingebracht, deren Breite der Breite der Behälter/Kartons entspricht.

Die entsprechende Vorrichtung zur Nachfüllung des Durchlaufregals kennzeichnet sich durch zumindest eine angetriebene Förderstrecke vorzugsweise in Form einer Staurollenbahn und zumindest ein Durchlaufregal mit geneigten Durchlaufkanälen in mehreren Regaletagen, vorzugsweise drei bis fünf Regaletagen, deren Ausgänge von einer Bedienungsperson erreichbar sind. Das Durchlaufregal weist jeweils ein verfahrbares, schienengeführtes Etagenbediengerät in jeder Regaletage zum automatischen Befüllen der Durchlaufkanäle mit Behälter/Kartons auf, die sortenreines Stückgut enthalten. Ferner besitzt das Durchlaufregal zumindest einen stationären Lift in einem Anschluss an die Förderstrecke für einen automatischen Transport der Behälter/Kartons von der Förderstrecke in jede ausgewählte Regaletage. Schließlich umfasst das Durchlaufregal eine Pufferstrecke in jeder Regaletage in einem Anschluss an den Lift für eine automatische Übernahme der Behälter/Kartons vom Lift, deren Ausgang vom Etagenbediengerät automatisch anfahrbar ist, wobei das Etagenbediengerät jeweils einen Behälter/Karton für einen Horizontaltransport zum Eingang eines ausgewählten Durchlaufkanals übernehmen kann.

Vorzugsweise sind die Etagenbediengeräte in als Schienen ausgebildeten Horizontal-Verstrebungen des Durchlaufregals geführt.

Das Durchlaufregal weist meist nur einseitige Durchlaufkanäle auf.

Auch kann das Durchlaufregal als Doppelregal ausgebildet sein, wobei die Etagenbediengeräte in einer mittigen Regalgasse des Doppelregals horizontal verfahrbar und bei den Ausgängen der Pufferstrecke und den Eingängen gegenüberliegender Durchlaufkanäle positionierbar sind.

Das Etagenbediengerät besitzt ein Lastaufnahmemittel mit antreibbaren Rollen, deren Achsen in Fahrrichtung des Etagenbediengeräts und quer zu den Durchlaufkanälen liegen.

Das Lastaufnahmemittel umfasst im Bereich der Axialenden der Rollen jeweils ein stationäres seitliches Geländer quer zur Fahrrichtung.

Vorzugsweise ist der Abstand der beiden seitlichen Geländer zueinander einstellbar und entspricht insbesondere der Breite eines Behälters/Kartons, wobei als Verstellmittel zumindest eines der beiden Geländer verstellbar ist.

Das Etagenbediengerät ist hierbei an den Eingängen unterschiedlich breiter Durchlaufkanäle positionierbar, wobei der Abstand der beiden Geländer jeweils auf die Breite des angesteuerte Durchlaufkanals eingestellt ist.

Vorzugsweise weist die Förderstrecke eine Erkennungseinrichtung zum Erkennen eines zugeführten Behälters/Kartons und zur Weitergabe der Behälterdaten an einen Zentralrechner auf, welcher einen vollautomatischen Betrieb der Zuführung der Behälter/Kartons nebst Sortierung in den Durchlaufkanälen bewerkstelligt.

Auch das Etagenbediengerät ist mit zumindest einem Sensor zum Erkennen des Befüllungszustands eines Durchlaufkanals ausgestattet.

Die Förderstrecke ist vorzugsweise Überkopf angeordnet, um einen ungehinderten Zugang zum Durchlaufregal und zum Kommissionierautomaten zu ermöglichen.

Die Förderstrecke kann auch eine Anbindungsstrecke für zumindest ein benachbartes Durchlaufregal aufweisen.

Das Durchlaufregal ist insbesondere aus mehreren hintereinander liegenden Regalmodulen zusammengesetzt, welche in Fahrrichtung der Etagenbediengeräte liegen.

Durch die Erfindung erfolgt also die Zuführung der Produkte zum Durchlaufregal über einen stationären Lift und leichtgewichtige verfahrbare Etagenbediengeräte einfachen Aufbaus in jeder Regaletage. Der stationäre Lift einfachen Aufbaus besitzt eine Verstellplattform vorzugsweise für nur einen Behälter. Es hat sich gezeigt, dass selbst bei Durchlaufregalen geringer Bauhöhe, die keine Hochregale sind, und von Hand einer Bedienungsperson am Ausgang erreichbar sind, gleichwohl der Einsatz eines Lifts von Vorteil ist. Auch ist die Erweiterbarkeit vorteilhaft, weil das System mit den Kommissionierautomaten mitwachsen kann. Es können die vorhandenen Etagenbediengeräte gleichermaßen die zusätzlichen Regalmodule anfahren bzw. bedienen. Die Durchlaufkanäle benötigen keine Kontrollinstrumente wie Sensoren oder Reflektoren zur Füllstandskontrolle, da die Kontrollinstrumente verfahrbar und auf den ohnehin vorhandenen Etagenbediengeräten angeordnet sind.

Die Erfindung bietet gegenüber dem eingangs genannten Stand der Technik diverse Vorteile:
■ Die Flächenlast und der Raumbedarf entsprechen den bestehenden Durchlaufregalen, wodurch einfache Nachrüstbarkeit gegeben ist.
■ Der Durchsatz des Durchlaufregals mit integriertem Lift und Regalbediengeräten in jeder Regaletage ist ca. viermal so hoch wie bei einer herkömmlichen Regalbediengerät-Lösung ohne Lift und ohne separate Regalbediengeräte in jeder Regaletage. Dadurch können nahezu alle Durchsatzanforderungen erfüllt werden. Produkte, die für das System zu schnell sind, werden im Allgemeinen direkt von einer Palette in den Automaten gefüllt.
■ Dadurch, dass die Produkte nicht in ein Regal eingelagert werden müssen, sondern auf einer Rollenfördertechnik (Etagenbediengerät und Lift sind jeweils ein kleines Stück verfahrbare Rollenfördertechnik) bis zum Durchlaufkanal gebracht werden, gibt es keine Einschränkungen in der Geometrie, solange das Produkt auf der Fördertechnik transportiert werden kann.
■ Der Energiebedarf des Systems ist durch die geringen bewegten Massen der kompakten Etagenbediengeräte sehr gering. Die elektrischen Anschlusswerte betragen nur ca. 10% der Werte, die für ein konventionelles großes verfahrbares Regalbediengerät mit integriertem Lift notwendig sind.
■ Da die Produkte über Fördertechnik zum Durchlaufregal fahren, können sie von beliebigen Orten im Lager kommen, z.B. direkt vom Wareneingang, aus einem manuellen Palettenlager oder aus einem automatischen Hochregallager.

Weitere Vorteile sind:
- Der Bereich der Etagenbediengeräte ist auch bei beidseitiger Anordnung der Durchlaufkanäle einfach begehbar.
- Bauliche Einfachheit/Kostenersparnis
- Die Zahl der Komponenten ist gering. Dadurch ist auch der Wartungsaufwand gering.
- Die Kontrolle, ob ein Durchlaufkanal voll ist, muss nicht mehr pro Durchlaufkanal angeordnet werden, sondern wird am Etagenbediengerät zentral mitgeführt.

Die Erfindung wird nachfolgend anhand von Ausführungsbeispielen unter Bezugnahme auf die beigefügten Zeichnungen näher beschrieben; es zeigen:
- Figur 1: eine Kommissionieranlage mit mehreren Blöcken von Kommissionierautomaten und beigeordneten Durchlaufregalen nebst Förderstrecken in einer schematischen Perspektivansicht gesehen von hinten,
- Figur 2: die Kommissionieranlage nach Figur 1 in größer Einzelheit in einer schematischen Perspektivansicht von vorne, gesehen von der Behälter-Förderstrecke,
- Figur 3: die Kommissionieranlage nach den Figuren 1 und 2 in einer schematischen Seitenansicht von hinten,
- Figur 4: die Einzelheit einer Regalebene eines Durchlaufregals mit einem Etagenbediengerät,
- Figur 5: die Regalebene nach Figur 4 schematisch von vorne unter Weglassung eines Behälters, und
- Figuren 6, 7 und 8: das Etagenbediengerät nach Figur 4 in einer perspektivischen Ansicht sowie in einer Ansicht von der Seite und in einer Draufsicht.

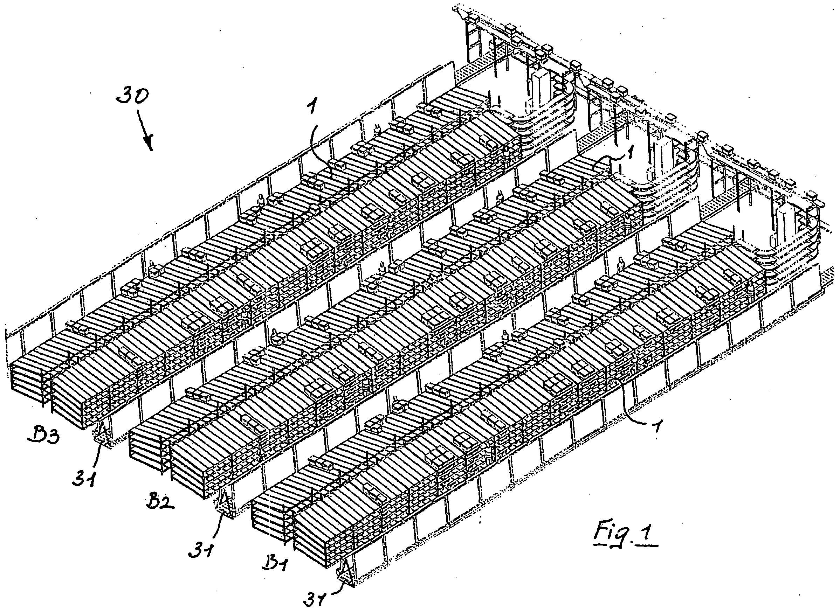

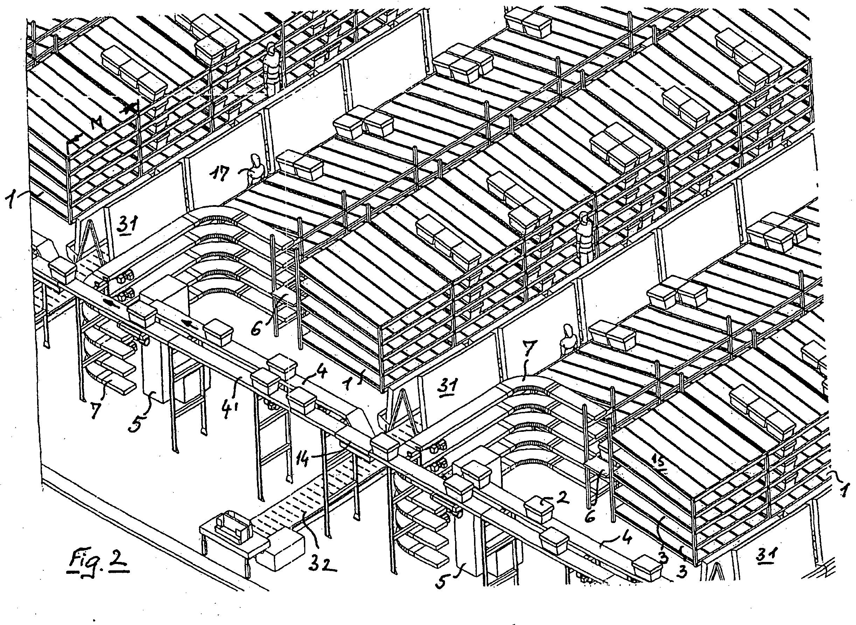

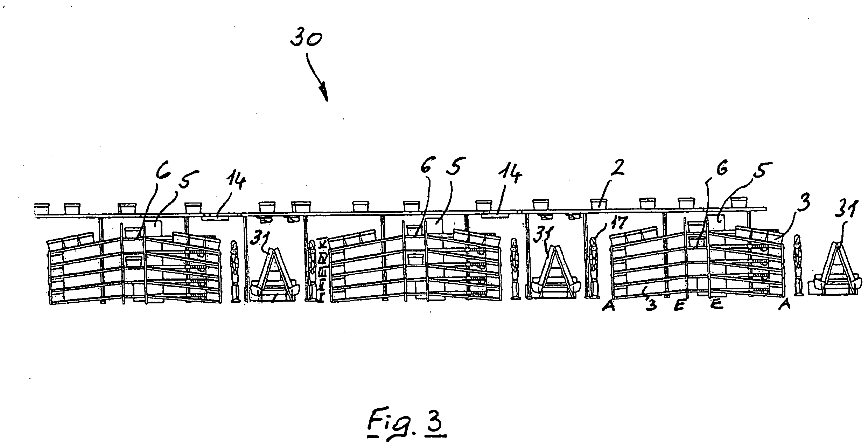

In den Figuren 1, 2 und 3 ist schematisch eine Kommissionieranlage 30 zum Kommissionieren von Stückgut mit Kommissionierautomaten 31 nebst zugeordneten Zentralbändern 32 und beigeordneten Durchlaufregalen 1 als Vorrat zum Nachfüllen des Kommissionierautomaten mit Stückgut in mehreren Blöcken B1, B2, B3 gezeigt.

Das Stückgut wird sortenrein in Behältern oder Kartons 2 einem jeden Block B1, B2, B3 auf jeweils einer angetriebenen Förderstrecke 4 zu einem Durchlaufregal 1 automatisch transportiert und nach Lesung und Erkennung über einen angesteuerten stationären Lift 5 und angesteuerte Etagenbediengeräte 6 des Durchlaufregals 1 in ausgewählten Durchlaufkanälen 3 des Durchlaufregals mit von einer Bedienungsperson 17 manuell erreichbaren Ausgängen A automatisch eingebracht.

Für sehr langsam drehendes Stückgut ist eine Mischbefüllung der Behälter oder Kartons 2 zweckmäßig, bei der also das Stückgut nicht sortenrein eingebracht wird.

Eingebrachtes Stückgut wird nach manueller Entnahme der Behälter/Kartons 2 an einem ausgewählten Ausgang A eines Durchlaufkanals 3 und Entpackung der Behälter/Kartons von einer Bedienungsperson 17 in nachzufüllende Kommissionierschächte des Kommissionierautomaten 31 sortenrein eingegeben.

Insbesondere sind in jedem Block eine angetriebene Förderstrecke 4 in Form einer Staurollenbahn vorgesehen, sowie ein Durchlaufregal 1 mit geneigten Durchlaufkanälen 3 in mehreren Regaletagen I, II, III, IV, V, vorzugsweise drei bis fünf Regaletagen, deren Ausgänge A von einer Bedienungsperson 17 erreichbar sind.

Das Durchlaufregal 1 enthält jeweils ein verfahrbares, schienengeführten Etagenbediengerät 6 in jeder Regaletage I, II, III, IV, V zum automatischen Befüllen der Durchlaufkanäle 3 mit Behälter/Kartons 2, die sortenreines Stückgut enthalten.

Ferner weist das Durchlaufregal 1 einen stationären Lift 5 in einem Anschluss an die Förderstrecke 4 für einen automatischen Transport der Behälter/Kartons 2 von der Förderstrecke 4 in jede ausgewählte Regaletage I, II, III, IV, V auf.

Auch besitzt das Durchlaufregal 1 jeweils eine Pufferstrecke 7 in jeder Regaletage I, II, III, IV, V in einem Anschluss an den Lift 5 für eine automatische Übernahme der Behälter/ Kartons 2 vom Lift, deren Ausgang vom Etagenbediengerät 6 automatisch anfahrbar ist, wobei das Etagenbediengerät jeweils einen Behälter/Karton 2 für einen Horizontaltransport zum Eingang E eines ausgewählten Durchlaufkanals 3 übernehmen kann.

Die Etagenbediengeräte 6 sind in als Schienen 8 ausgebildeten Horizontal-Verstrebungen des Durchlaufregals 1 durch Führungsrollen geführt.

Im besonderen ist das Durchlaufregal 1 als Doppelregal ausgebildet ist, und es können die Etagenbediengeräte 6 in einer mittigen Regalgasse R des Doppelregals horizontal in Fahrrichtung F verfahren und bei den Ausgängen der Pufferstrecke und den Eingängen E gegenüberliegender Durchlaufkanäle 3 positioniert werden.

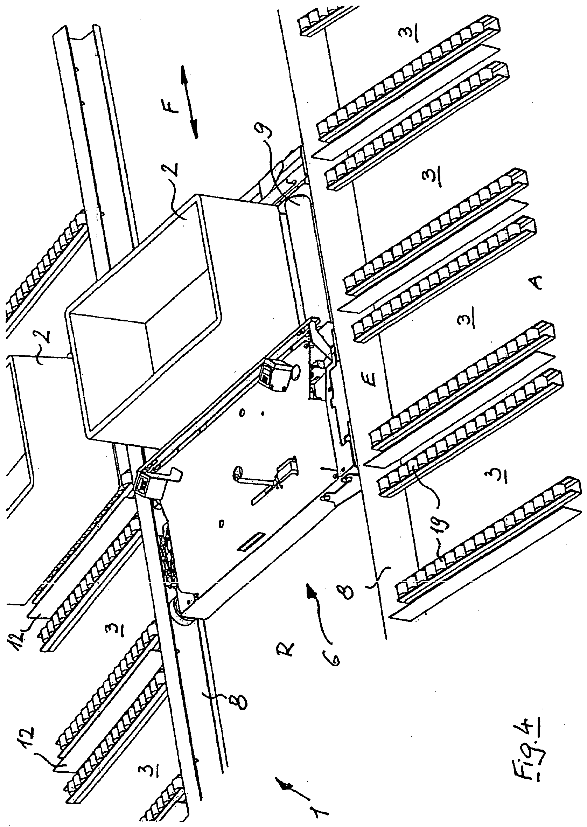

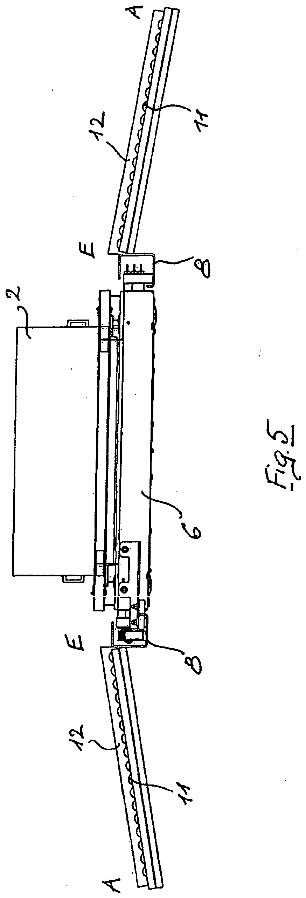

Das Etagenbediengerät 6 weist ein Lastaufnahmemittel mit antreibbaren Rollen 9 auf, deren Achsen in Fahrrichtung F des Etagenbediengeräts 6 und quer zu den Durchlaufkanälen 3 liegen, wie dies insbesondere den Figuren 4 bis 8 zu entnehmen ist.

Das Lastaufnahmemittel besitzt im Bereich der Axialenden der Rollen 9 jeweils ein stationäres seitliches Geländer 20, 21 quer zur Fahrrichtung F.

Der Abstand der beiden seitlichen Geländer 20, 21 zueinander ist einstellbar, wobei der eingestellte Abstand der Breite eines Behälters/Kartons 2 entspricht. Im Ausführungsbeispiel ist nur das vordere Geländer 20 als Verstellmittel vorgesehen, welches am Rand des Etagenbediengeräts liegt. Die beiden seitlichen Geländer 20, 21 erstrecken senkrecht zur Fahrrichtung F.

Das Etagenbediengerät 6 kann an den Eingängen E unterschiedlich breiter Durchlaufkanäle 3 positioniert werden, wobei der Abstand der beiden Geländer 20, 21 jeweils auf die Breite des angesteuerte Durchlaufkanals 3 eingestellt ist.

Das Etagenbediengerät 6 weist ferner einen Elektroantrieb 13 aufweist, welcher vorzugsweise über Schleifkontakte 10 mit einer stationären Stromschiene verbunden ist.

Der Elektroantrieb 13 besitzt einen Drehgeber, mit welchem die verfahrene Distanz des Etagenbediengeräts 6 gemessen werden kann.

Das Etagenbediengerät 6 ist mit zwei Sensoren 11 zum Erkennen des Befüllungszustands eines Durchlaufkanals 3 ausgestattet.

Die Förderstrecke 4 weist eine Erkennungseinrichtung zum Erkennen eines zugeführten Behälters/Kartons 2 und zur Weitergabe der Behälterdaten an einen Zentralrechner auf, welcher einen vollautomatischen Betrieb der Zuführung der Behälter/Kartons nebst Sortierung in den Durchlaufkanälen 3 bewerkstelligt.

Die Förderstrecke 4 ist Überkopf angeordnet und ermöglicht einen freien Durchgang zum Kommissionierregal nebst Durchlaufregal.

Die Förderstrecke 4 weist eine Anbindungsstrecke 4' für benachbarte Durchlaufregale gemäß Figur 1 auf, wobei die Durchlaufregale 1 in einer Parallelanordnung vorgesehen sind.

Jedes Durchlaufregal 1 ist aus mehreren hintereinander liegenden Regalmodulen M zusammengesetzt, welche in Fahrrichtung F der Etagenbediengeräte 6 liegen.

Die Durchlaufkanäle 2 weisen ein kurze Längserstreckung auf und besitzen zwei seitliche Röllchenleisten 19, wobei benachbarte Durchlaufkanäle 3 durch Trennstege 12 voneinander abgetrennt sind.

Auch sind im Bereich der Pufferstrecken Ausschuss-Durchlaufkanäle 15 vorgesehen, in welchen beschädigte oder nicht identifizierte Behälter/Kartons 2 aussortiert und separat weiterbehandelt werden.

Das Etagenbediengerät 6 besitzt also Rollen 9 als Lastaufnahmemittel. Die Rollen 9 sind angetrieben und können einen Behälter/Karton 2 quer zur Fahrtrichtung F aufnehmen und abgeben.

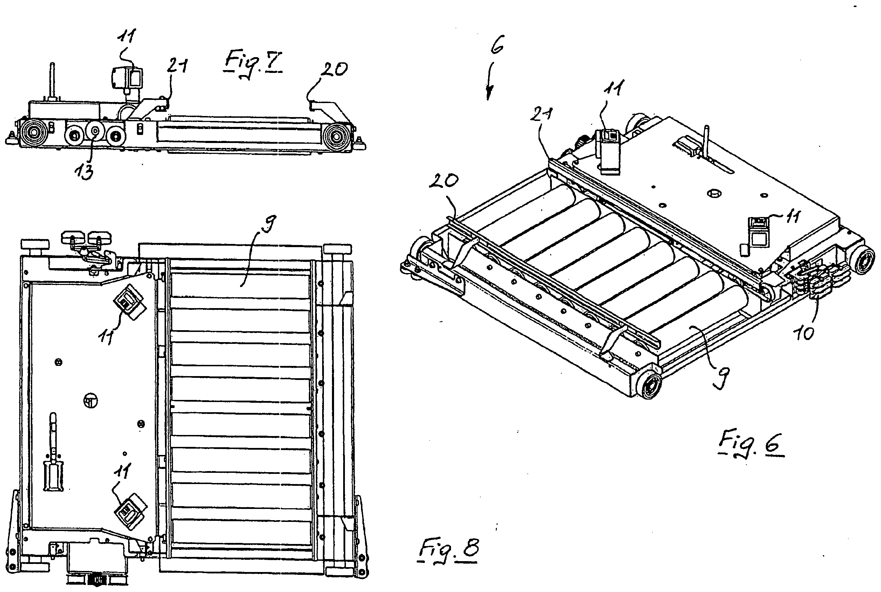

Das Etagenbediengerät 6 fährt in Fahrschienen 8. In der beschriebenen Ausführungsvariante erfolgt der Antrieb des Etagenbediengeräts mit einem sog. Omega-Antrieb gemäß Figur 7 entlang eines fix verlegten Zahnriemens, wobei der Zahnriemen wie bei einem Omega um die Antriebsrolle läuft. Der Motor des Etagenbediengeräts besitzt einen Drehgeber, mit dem die verfahrene Distanz gemessen werden kann. Somit kennt das Etagenbediengerät seine Position und kann sich vor dem gewünschten Durchlaufkanal 3 positionieren. Der Antrieb kann grundsätzlich auch reibschlüssig mit Rädern ausgeführt werden. Das Etagenbediengerät wird durch Führungsrollen in einer fixen Position in Bezug auf das Durchlaufregal gehalten, da die Schienen 8 Bestandteil des Durchlaufregals sind.

Durch Einschalten der Rollen kann das Etagenbediengerät Behälter/Kartons 2 von der Fördertechnik aufnehmen und in die Durchlaufkanäle 3 abgeben. Ein Durchlaufkanal wird aus zwei oder mehreren Röllchenleisten 19 und begrenzenden Trennstegen 12 gebildet.

Das Etagenbediengerät 6 ist mit Sensoren 11 ausgestattet, die es ermöglichen, zu erkennen, ob ein Durchlaufkanal 3 noch einen Behälter/Kartons 2 aufnehmen kann, oder der Durchlaufkanal voll ist. Dies kann mit einem Sensor 11 geschehen, der in der Lage ist, die Entfernung zum nächsten Hindernis zu messen (z.B. optisch oder mit Ultraschall). Es kann aber auch pro Durchlaufkanal ein Reflektor angeordnet werden, und eine Lichtschranke prüft, ob die Wegstrecke bis zum Reflektor frei ist. Sieht die Lichtschranke den Reflektor, so ist der Durchlaufkanal frei.

Der Sensor 11 kann auch dafür verwendet werden, um zu kontrollieren, dass ein Behälter/Karton 2 korrekt in den Durchlaufkanal 3 abgegeben wurde.

Im Falle von unterschiedlich breiten Behältern 2 und auf die Breite angepassten Durchlaufkanälen muss der Behälter/Karton 2 an einer definierten Kante ausgerichtet sein. In diesem Fall ist es das vordere Geländer 20 des Etagenbediengeräts 6. Die Ausrichtung an dem Geländer kann dadurch erfolgen, dass in einer weiteren Ausführungsvariante der Behälter/Karton von der Fördertechnik in der ausgerichteten Position bereits übernommen wird. Primär ist jedoch vorgesehen, das Geländer 20 verschiebbar auszuführen, um die gewünschte Ausrichtung zu erreichen. Mit dem verschiebbaren Geländer 20 ist auch eine gleichzeitige Vermessung der Produktbreite möglich. Dadurch könnten Abweichungen zwischen Kanalbreite und Produktbreite erkannt werden.

Der Lift kann mit unterschiedlichen Liftplattformen ausgestattet sein. In der einfachsten Variante ist die Plattform einfach tief, d.h. es kann pro Fahrt nur ein Behälter/Karton 2 mitgeführt werden. Grundsätzlich ist es möglich, auch doppelt oder mehrfachtiefe Plattformen zu bauen, um mehrere Behälter/Kartons pro Fahrt transportieren zu können. Je nach Anordnung der Fördertechnik kann der Lift als sog. C-Förderer oder S-Förderer arbeiten. "C" bedeutet, dass der Behälter/Karton ein "C" beschreibt, also der Behälter/Karton in eine Richtung einfährt und in die andere Richtung wieder ausfährt. Bei einem "S" fährt der Behälter/Karton in dieselbe Richtung wieder vom Lift ab.

## Patentansprüche

1. Verfahren zum Kommissionieren von Stückgut in einer Kommissionieranlage (30) mit einem Kommissionierautomaten (31) und beigeordnetem Durchlaufregal (1) als Vorrat zum Nachfüllen des Kommissionierautomaten mit Stückgut, wobei das Stückgut sortenrein in Behältern oder Kartons (2) auf einer angetriebenen Förderstrecke (4) zum Durchlaufregal (1) automatisch transportiert und über einen angesteuerten stationären Lift (5) und angesteuerte Etagenbediengeräte (6) des Durchlaufregals (1) in ausgewählten Durchlaufkanälen (3) des Durchlaufregals mit von einer Bedienungsperson (17) manuell erreichbaren Ausgängen (A) automatisch eingebracht wird,
**dadurch gekennzeichnet,**
**dass** das Stückgut nach manueller Entnahme der Behälter/ Kartons (2) an einem ausgewählten Ausgang (A) eines Durchlaufkanals (3) und Entpackung der Behälter/Kartons von der Bedienungsperson in nachzufüllende Kommissionierschächte des Kommissionierautomaten (31) sortenrein eingegeben wird, wobei unterschiedlich breite Behälter/ Kartons (2) im Etagenbediengerät (6) durch Verstellmittel (20) an einer Behälterseite ausgerichtet und in ausgewählte Durchlaufkanäle (3) eingebracht werden, deren Breite der Breite der Behälter/Kartons (2) entspricht.

2. Verfahren nach Anspruch 1, wobei zumindest eine angetriebene Förderstrecke (4) vorzugsweise in Form einer Staurollenbahn vorgesehen und zumindest ein Durchlaufregal (1) ausgebildet ist,
- mit geneigten Durchlaufkanälen (3) in mehreren Regaletagen (I, II, III, IV, V), vorzugsweise drei bis fünf Regaletagen, deren Ausgänge (A) von einer Bedienungsperson (17) erreichbar sind,
- mit jeweils einem verfahrbaren, schienengeführten Etagenbediengerät (6) in jeder Regaletage (I, II, III, IV, V) zum automatischen Befüllen der Durchlaufkanäle (3) mit Behälter/Kartons (2), die vorzugsweise sortenreines Stückgut enthalten,
- mit zumindest einem stationären Lift (5) in einem Anschluss an die Förderstrecke (4) für einen automatischen Transport der Behälter/Kartons (2) von der Förderstrecke (4) in jede ausgewählte Regaletage (I, II, III, IV, V), und
- mit einer Pufferstrecke (7) in jeder Regaletage (I, II, III, IV, V) in einem Anschluss an den Lift (5) für eine automatische Übernahme der Behälter/Kartons (2) vom Lift, deren Ausgang vom Etagenbediengerät (6) automatisch anfahrbar ist, wobei das Etagenbediengerät jeweils einen Behälter/Karton (2) für einen Horizontaltransport zum Eingang (E) eines ausgewählten Durchlaufkanals (3) übernehmen kann,
**dadurch gekennzeichnet,**
**dass** die Etagenbediengeräte (6) in als Schienen (8) ausgebildeten Horizontal-Verstrebungen des Durchlaufregals (1) geführt werden.

3. Verfahren nach Anspruch 2,
**dadurch gekennzeichnet,**
**dass** das Durchlaufregal (1) einseitige Durchlaufkanäle (3) aufweist, und die Etagenbediengeräte (6) auf der Eingangsseite der Durchlaufkanäle horizontal verfahren werden, oder dass das Durchlaufregal (1) als Doppelregal ausgebildet ist und die Etagenbediengeräte (6) in einer mittigen Regalgasse (R) des Doppelregals horizontal verfahren werden und bei den Ausgängen der Pufferstrecke und den Eingängen (E) gegenüberliegender Durchlaufkanäle (3) positioniert werden.

4. Verfahren nach einem der Ansprüche 2 oder 3, wobei das Etagenbediengerät (6) ein Lastaufnahmemittel aufweist, das jeweils ein stationäres seitliches Geländer (20, 21) quer zur Fahrrichtung (F) besitzt, und der Abstand der beiden seitlichen Geländer (20, 21) zueinander einstellbar ist und vorzugsweise der Breite eines Behälters/ Kartons (2) entspricht, und zumindest eines der beiden Geländer (20) verstellt wird.

5. Verfahren nach Anspruch 4,
**dadurch gekennzeichnet,**
**dass** das Etagenbediengerät (6) an den Eingängen (E) unterschiedlich breiter Durchlaufkanäle (3) positioniert wird, wobei der Abstand der beiden Geländer (20, 21) jeweils auf die Breite des angesteuerte Durchlaufkanals (3) eingestellt wird.

6. Verfahren nach einem der Ansprüche 1 bis 5, wobei das Etagenbediengerät (6) einen Elektroantrieb (13) aufweist, welcher vorzugsweise über Schleifkontakte (10) mit einer stationären Stromschiene verbunden ist, und der Elektroantrieb (13) einen Drehgeber besitzt, mit welchem die verfahrene Distanz des Etagenbediengeräts (6) gemessen wird.

7. Verfahren nach einem der Ansprüche 1 bis 6,
**dadurch gekennzeichnet,**
**dass** durch zumindest einen Sensor (11) des Etagenbediengeräts (6) der Befüllungszustand eines Durchlaufkanals (3) erkannt wird.

8. Verfahren nach einem der Ansprüche 1 bis 7,
**dadurch gekennzeichnet,**
**dass** durch eine Erkennungseinrichtung der Förderstrecke (4) ein zugeführter Behälters/Karton (2) erkannt wird und die Behälterdaten an einen Zentralrechner weitergegeben werden, welcher einen vollautomatischen Betrieb der Zuführung der Behälter/Kartons nebst Sortierung in den Durchlaufkanälen (3) bewerkstelligt.

## Claims

1. Process for commissioning individually packaged products in a commissioning unit (30) with an automatic commissioning unit (31) and coordinate flow shelf (1) as a reserve for refilling the automatic commissioning unit with individually packaged products, wherein the individually packaged products are transported automatically to the flow shelf (1) in containers or cardboard boxes (2) on a driven conveying section (4) such that they are all of the same kind and after reading and recognition, they are automatically introduced via an activated stationary elevator (5) and activated level control units (6) of the flow shelf (1) in selected throughput channels (3) of the flow shelf with outlets (A) that can be reached by a human operator by hand,
**characterized in that**
after removal of the containers/cardboard boxes (2) manually at a selected outlet (A) of a throughput channel (3) and unpacking of the containers/cardboard boxes by the human operator, the individually packaged products are introduced into commissioning shafts of the automatic commissioning unit (31), which shafts are to be refilled, in such a way that they are all of the same kind, wherein containers/cardboard boxes (2) of different widths are aligned in the level control unit (6) by adjusting means (20) on one side of the container and introduced into selected throughput channels (3), whose width corresponds to the width of the containers/cardboard boxes (2).

2. Process for carrying out the process in accordance with claim 1,
comprising
at least one driven conveying section (4), preferably in the form of an accumulating roller conveyor, and
at least one flow shelf (1)
- with sloped throughput channels (3) in a plurality of bay levels (I, II, III, IV, V), preferably three to five bay levels, whose outlets (A) can be reached by a human operator (17),
- with a displaceable, track-guided level control unit (6) each in each bay level (I, II, III, IV, V) for automatically filling the throughput channels (3) with containers/cardboard boxes (2), which preferably contain individually packaged products that are all of the same kind,
- with at least one stationary elevator (5) connected to the conveying section (4) for automatically transporting the containers/cardboard boxes (2) from the conveying section (4) into each selected bay level (I, II, III, IV, V), and
- with a buffer section (7) in each bay level (I, II, III, IV, V) connected to the elevator (5) for automatically taking over the containers/cardboard boxes (2) from the elevator, whose outlet can be automatically approached by the level control unit (6), wherein said level control unit can take over a container/cardboard box (2) each for horizontal transportation to the inlet (E) of a selected throughput channel (3)
**characterized in that**
the level control units (6) are guided in horizontal braces of the flow shelf (1), which said braces are designed as rails (8).

3. Process in accordance with claim 2,
**characterized in that**
the flow shelf (1) has one-sided throughput channels (3), and the level control units (6) are horizontally displaceable on the inlet side of the throughput channels, or
the flow shelf (1) is designed as a double bay and the level control units (6) are horizontally displaceable in a central bay aisle (R) of the double bay and can be positioned at the outlets of the buffer section and at the inlets (E) of opposite throughput channels (3).

4. Process in accordance with one of the claims 2 or 3,
wherein the level control unit (6) has a load pickup means which load pickup means has a stationary lateral railing (20, 21) each at right angles to the direction of travel (F), and the distance between the two lateral railings (20, 21) can be set and preferably corresponds to the width of a container/cardboard box (2), and at least one of the two railings (20) is adjustable.

5. Process in accordance with claim 4,
**characterized in that**
the level control unit (6) can be positioned at the inlets (E) of throughput channels (3) having different widths, the distance between the two railings (20, 21) being able to be set to the width of the activated throughput channel (3).

6. Process in accordance with one of the claims 1 through 5,
wherein the level control unit (6) has an electric drive (13), which is connected to a stationary conductor rail preferably via sliding contacts (10), and the electric drive (13) has a shaft encoder, with which the distance traveled by the level control unit (6) can be measured.

7. Process in accordance with one of the claims 1 through 6,
**characterized in that**
the level control unit (6) is equipped with at least one sensor (11) for recognizing the state of filling of a throughput channel (3).

8. Process in accordance with one of the claims 1 through 7,
**characterized in that**
the conveying section (4) has a recognition means for recognizing a fed container/cardboard box (2) and for transmitting the data of the container to a central computer, which brings about fully automatic operation of feeding the containers/cardboard boxes along with sorting in the throughput channels (3).

## Revendications

1. Procédé de préparation de commandes de marchandises au détail dans une installation de préparation de commandes (30) dotée d'un automate de préparation de commandes (31) et de l'étagère de transfert (1) associée servant de stock de remplissage de l'automate de préparation des commandes en marchandises au détail, les marchandises au détail étant automatiquement transportées par type de produit dans des récipients ou dans des cartons (2) sur un tronçon de transport (4) entraîné jusqu'à l'étagère de transfert (1) avant d'être automatiquement insérées dans des canaux de transfert (3) dotés de sorties (A) pouvant être atteintes manuellement par un opérateur (17), après lecture et reconnaissance par le biais d'un ascenseur (5) stationnaire approché et des appareils de commande d'étage (6) approchés de l'étagère de transfert (1),
**caractérisé en ce que**
les marchandises au détail sont insérées par type de produit dans des cases de préparation de commandes de l'automate de préparation des commandes (31) à remplir, après retrait manuel des récipients/cartons (2) au niveau d'une sortie (A) sélectionnée d'un canal de transfert et déballage des récipients/cartons par un opérateur, des récipients/cartons (2) de différentes largeurs étant orientés dans l'appareil de préparation d'étage (6) au niveau d'un côté des récipients par le biais de moyens de déplacement (20) et étant insérés dans des canaux de transfert (3) sélectionnés dont la largeur correspond à la largeur des récipients/cartons (2).

2. Procédé selon la revendication 1, au moins un tronçon de transport (4) entraîné étant de préférence prévu sous la forme d'une ligne de transport à rouleaux et au moins une étagère de transfert (1) étant réalisée
- avec des canaux de transfert (3) adaptés placés à plusieurs étages d'étagères (I, II, III, IV, V), de préférence trois à cinq étages d'étagères, dont les sorties (A) peuvent être atteintes par un opérateur (17),
- avec respectivement un appareil de commande d'étagères (6) mobile guidé sur rails prévu à chaque étage d'étagères (I, II, III, IV, V) afin de remplir automatiquement les canaux de transfert (3) avec les récipients/cartons (2) contenant de préférence les marchandises au détail classées par type de produit,
- avec au moins un ascenseur (5) stationnaire relié au tronçon de transport (4) permettant de transporter automatiquement les récipients/cartons (2) du tronçon de transport (4) à chaque étage d'étagères (I, II, III, IV, V) sélectionné, et
- avec une section tampon (7) prévue à chaque étage d'étagère (I, II, III, IV, V) au niveau d'une section de jonction positionnée au niveau de l'ascenseur (5) servant à prendre automatiquement les récipients/cartons (2) arrivant par l'ascenseur et dont la sortie est automatiquement accessible à un appareil de commande d'étage (6), l'appareil de commande d'étage pouvant respectivement prendre un récipient/ carton (2) pour le transporter horizontalement jusqu'à l'entrée (E) d'un canal de transfert (3) sélectionné,
**caractérisé en ce que**
les appareils de commande d'étage (6) sont guidés dans des arcs-boutants horizontaux prenant la forme de rails (8) de l'étagère de transfert (1).

3. Procédé selon la revendication 2,
**caractérisé en ce que**
l'étagère de transfert (1) comporte des canaux de transfert (3) unilatéraux et que les appareils de commande d'étage (6) peuvent être déplacés horizontalement sur un côté d'entrée des canaux de transfert ou que l'étagère de transfert (1) prend la forme d'une double étagère et que les appareils de commande d'étage (6) sont déplacés horizontalement dans un couloir d'étagère (R) central de la double étagère et sont positionnés aux sorties du tronçon tampon et aux entrées (E) des canaux de transfert (3) opposés.

4. Procédé selon l'une quelconque des revendications 2 ou 3,
l'appareil de commande d'étage (6) comportant un moyen d'absorption de charge possédant respectivement une rampe (20, 21) latérale stationnaire perpendiculaire à la direction de déplacement (F) et la distance entre les deux rampes (20, 21) latérales étant réglable et correspondant de préférence à la largeur d'un récipient/carton (2) et au moins une des deux rampes (20) étant réglable.

5. Procédé selon la revendication 4,
**caractérisé en ce que**
l'appareil de commande d'étage (6) est positionné au niveau des entrées (E) des canaux de transfert (3) de différentes largeurs, la distance entre les deux rampes (20, 21) étant respectivement réglée en fonction de la largeur du canal de transfert (3) approché.

6. Procédé selon l'une quelconque des revendications 1 à 5,
l'appareil de commande d'étage (6) comportant un entraînement électrique (13) de préférence relié à un rail électrique stationnaire par le biais de contacts par frottement (10) et l'entraînement électrique (13) possédant un codeur rotatif permettant de mesurer la distance parcourue par l'appareil de commande d'étage (6).

7. Procédé selon l'une quelconque des revendications 1 à 6,
**caractérisé en ce que**
l'état de remplissage d'un canal de transfert (3) est détecté par au moins un capteur (11) de l'appareil de commande d'étage (6).

8. Procédé selon l'une quelconque des revendications 1 à 7,
**caractérisé en ce que**
la présence d'un récipient/carton (2) est détectée par un dispositif de détection du tronçon de transport (4) et que les données relatives au récipient sont transmises à une unité centrale qui amène de façon entièrement automatisée les récipients/cartons en incluant la réalisation du tri entre les différents canaux de transfert (3).
